# EUROPEAN PATENT APPLICATION

(11) **EP 4 656 890 A1**
(43) Date of publication of application: **03.12.2025**
(21) Application number: 25179411.1
(22) Date of filing: 28.05.2025
(51) Int. Cl.: F16B 5/02

(54) **FASTENER FOR FASTENING A COVER LAYER TO A RECEIVING STRUCTURE**

(30) Priority: 30.05.2024 FI 20245693
(71) Applicant: VILPE Oy, 65610 Mustasaari (FI)
(72) Inventor: EINESALO, Antti, 65610 Mustasaari (FI)
(74) Representative: Laine IP Oy

(57) **Abstract**

The invention relates to a novel fastener (100) for fastening a cover layer to a receiving structure. A channel (13) extends through the body (11) of the sleeve (10) of the fastener (100) comprising a sleeve (10) and an attachment means (20), such as a screw or a nail, with the attachment means (20) being placed inside the sleeve. The fastener (100) further comprises retaining means (30) having at least one protrusion penetrating through the wall of the body (11) of the sleeve, limiting the movement of the attachment means (20) in the longitudinal direction of the body (11) of the sleeve.

## Description

### TECHNICAL FIELD

The present invention relates to auxiliary equipment for building technology. The present invention is especially related to a fastener for fastening a cover layer to a receiving structure.

### BACKGROUND

In construction work there often arises a need to fasten cover layers to relatively hard structures. One example of this kind of need is fastening of insulation boards or bitumen membrane and insulation to a sheet metal, concrete or wood substrate. Fasteners based on various screws or nails can be used for fastening, the screws and nails being screwed or hammered into the receiving structure either directly or via a wall plug. The fasteners can comprise a relatively large end flange for maximizing the area contacting the cover layer.

Although the use of fasteners facilitates the fastening of the cover layer, it can be challenging to simultaneously take out the fasteners and the screws or nails acting as attachment means for the fasteners and place them in position, especially if the working position of the craftsman doing the installation is uncomfortable.

### SUMMARY

The present invention discloses a novel type of fastener comprising a sleeve and an attachment means for attaching a cover layer to a receiving structure, such as a sheet metal, concrete or wood substrate, for example. A channel having a first section and a second section extends through the elongated body of the sleeve. The sleeve is attached to the receiving structure with an attachment means arranged inside the sleeve channel. The attachment means comprises a shank that can be arranged into the first and second section of the channel, and a head arranged at the end of the shank and that can be slidably arranged into the first section of the channel. The attachment means can be, for example, in the form of a roof construction screw, concrete screw or concrete nail. In addition, the fastener has retaining means penetrating the wall of the sleeve body that limit the movement of the screw in the sleeve channel.

The invention is characterized by what is disclosed in the characterizing part of the independent claims.

Considerable advantages are achieved by means of the invention. The attachment means, such as a screw or nail, can be pre-assembled in the channel of the sleeve of the fastener in advance, as the retaining means limit the movement of the attachment means in the channel at least in the direction of the end of the fastener, thus preventing the attachment means from falling out of the sleeve channel during the fastening of the cover layer. This greatly facilitates fastening of the cover layer.

In addition, the retaining means can be used to limit the movement of the attachment means in the channel towards the tip of the fastener sleeve of the fastener. Thus the attachment means will not be able to disruptively protrude out of the tip of the sleeve during storage of the fastener or when the fastener is positioned at the desired attachment point before attaching the attachment means itself to the receiving structure.

By using retaining means penetrating the body of the fastener sleeve, they can be implemented very cost-effectively without any changes to the design of the sleeve. In addition, the mounting position of the retaining means in the fastener can be easily changed, thus allowing the pre-installation of the attachment means of different lengths in the channel of the fastener sleeve.

### BRIEF DESCRIPTION OF DRAWINGS

In the following, some embodiments of the invention are disclosed in more detail by means of reference to the appended drawings, in which:
- FIGURE 1a: is a cross-sectional view of a fastener according to one embodiment,
- FIGURE 1b: is an enlarged partial view of the fastener of FIGURE 1a.
- FIGURE 2: is a cross-sectional view of the fastener sleeve of FIGURES 1a and 1b.
- FIGURE 3: is a cross-sectional view of the fastener according to FIGURE 1a, perpendicular to the direction of the longitudinal axis of the fastener, and
- FIGURE 4: is another embodiment of the fastener according to this disclosure.

### EMBODIMENTS

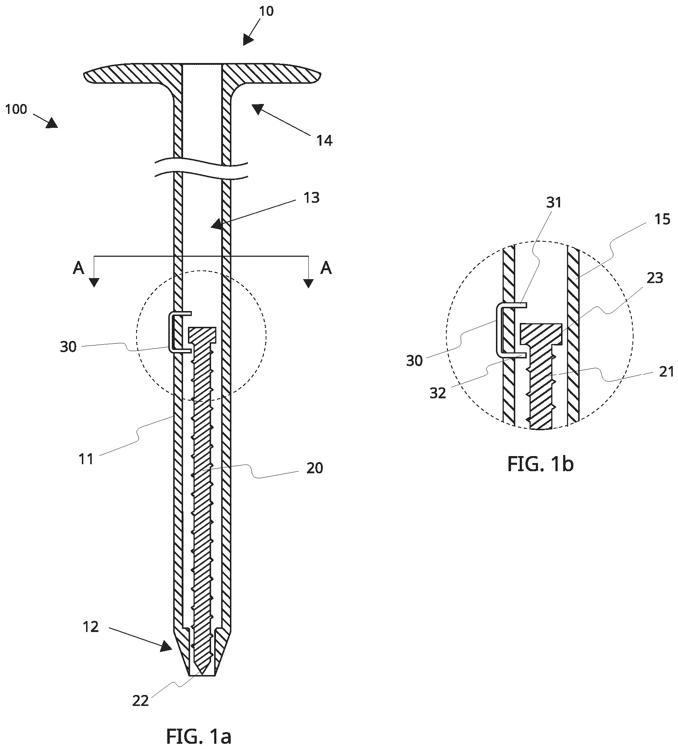

FIGURES 1a, 1b, 2 and 3 show a fastener according to a first embodiment for fastening the cover layer to the receiving structure. The cover layer can be, for example, an insulation board or a combination of bitumen membrane and insulation material, which is attached to the receiving structure. The receiving structure can be a sheet metal, concrete or wooden substrate, for example. More generally the fastening kit is designed to fasten plate-like or layered plate-like pieces to comparatively hard receiving structures.

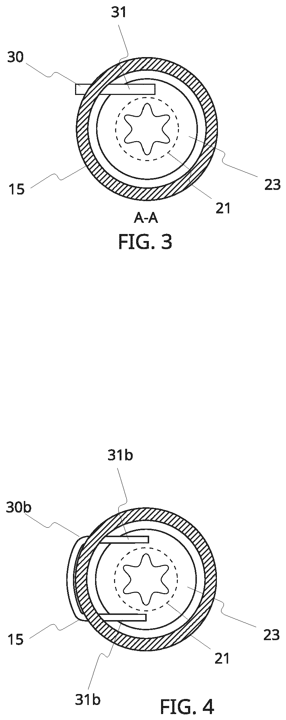

FIGURE 1a shows a cross-sectional view parallel to the longitudinal axis of the fastener sleeve of the first embodiment. FIGURE 1b is an enlarged partial view of the area surrounded by a dashed line in FIGURE 1a. In the first embodiment, the fastener 100 comprises two main components, i.e. sleeve 10 and attachment means 20, designed to cooperate with the sleeve 10. The attachment means comprises a shank 21 as well as a head 23, arranged to the end of the shank 21. In FIGURES 1a and 1b the attachment means 20 is in the form of a screw. The shank 21 of the screw 20, provided with an external thread, extends between the tip 22 and the head 23 of the screw. The length of the shank 21 can be in the range of 30 to 150mm, e.g. 70mm. The tip 22 arranged at the first end of the screw 20 can be sharp and cutting. Preferably the thread portion continues along the whole length of the shank 21 from the head 23 to the tip 22. The end of the head 23 arranged at one end of the screw 20 is provided with a slot 24 connecting with the tool, the slot being a Torx slot in the example of figure 4. Other tool slots, such as cruciform, internal hex and the like are also possible. Alternatively, the attachment means 20 can be, for example, a concrete screw or nail, or a machine screw having a blunt tip.

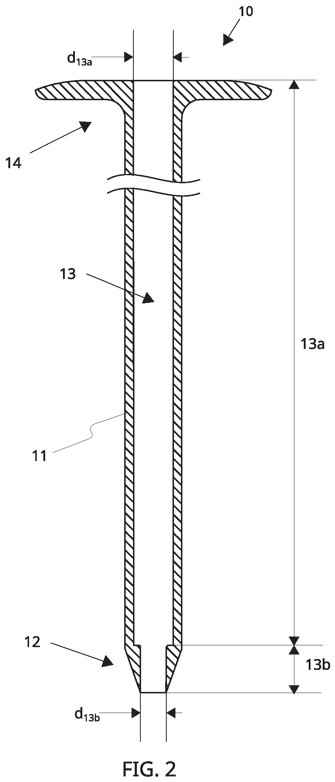

FIGURE 2 illustrates only the sleeve of the embodiment of the fastener 100 according to FIGURE 1a and 1b and some of its details. The sleeve 10 comprises a sleeve tip 12 and a sleeve end 14 at the opposite ends of the sleeve, as well as an elongated body 11 extending between the tip 12 and the end 14. The length of the sleeve 21 can be in the range of 20 to 600mm, e.g. 150mm. The end 14 of the sleeve can be in the form of, for example, a fixed or separate end flange attached to the end of the sleeve. The outer diameter of the tip 12 arranged at the first end of the body 11 can be narrower than the rest of the body 11 for facilitating installation the sleeve 10 through the insulation layer. In the example of FIGURES 1a and 2, the end of the tip 12 is chamfered to produce a narrowed outer diameter, but the tip 12 can also be rounded or throughout narrower than the rest of the body 11. In the example of FIGURES 1a and 2 the end flange 14 arranged at one end of the body 11 has a radially extending shape, with a larger outer diameter than the rest of the body 11 to prevent the sleeve 10 from penetrating the insulation layer. Depending on the embodiment, the diameter of the end flange can be, for example, 50mm.

A channel 13 runs through the body 11, the channel having a wide first section 13a and a narrow second section 13b. The first section 13a of the channel 13 can also be called the wide section and the second section 13b can be called the narrower section. In more detail, the inner diameter d₁₃ₐ of the first section 13a is larger than the diameter d_{13b} of the second diameter. In other words, the dimensions d₁₃ₐ and d_{13b} are the inner diameters of the sleeve 10. The purpose of the first section 13a is to allow axial movement of the screw 20 inside the channel 13, whereas the purpose of the second section 13b is to allow the movement of the shank 21 of the screw 20 but to prevent the movement of the head 23 of the screw 20 through the tip 12 of the sleeve 10. In this context the term *axial dimension* refers to the dimension in which the channel 13 of the sleeve 10 extends, i.e. its longitudinal axis. Thus the axial movement of the screw 20 takes place in the direction of the longitudinal axis of the body 11 of the sleeve 10. In the context of this disclosure, the terms *above* and *below* are intended to be interpreted in relation to the longitudinal axis of the sleeve body. In other words, a position *above* the reference point means a position that is closer to the end of the sleeve than the reference point in the direction of the longitudinal axis of the sleeve, and a position *below* the reference point means a position that is closer to the tip of the sleeve than the reference point in the direction of the longitudinal axis. Similarly, in the context of this disclosure, the direction *upwards* is intended to be interpreted as the direction from the tip of the sleeve towards the end of the sleeve, and the direction *downwards* from the end of the sleeve towards the tip of the sleeve.

In the embodiment of FIGURE 2 the narrow section 13b of the channel 13 is in the area of the tip 12 and the wide section 13a in another area of the body 11, especially in the area of the end flange 14. The diameter d₁₃ₐ of the wide section transforms preferably abruptly into the diameter d_{13b} of the narrow section for forming a shoulder into the channel 13, the shoulder functioning as the bottom for the head 23 of the screw 20 acting as the attachment means. The head 23 of the screw has a diameter larger than the diameter of the shank 21. The diameter of the shank 21 is taken from the crest of the thread, i.e. it represents the largest diameter of the thread section. The screw 20 is dimensioned such in relation to the sleeve 10 that the screw 20 can be driven through the sleeve 10. In other words, the diameters of the shank 21 and the head 23 of the screw 20 are smaller than the diameter D_{13b} of the wide portion 13b of the channel 13 of the sleeve 10, which allows axial movement of the screw 20 in the channel 13. On the other hand, the screw 20 and the sleeve 10 are dimensioned so that the screw 20 is not allowed to escape from the tip 12 of the sleeve 10. In some embodiments the diameter of the shank 21 of the screw 20 can be dimensioned so as to be a thread fit in relation to the narrow section 13b of the channel 13 of the sleeve 10.

The fastener 100 illustrated in FIGURES 1a and 1b further comprises retaining means 30 to limit the movement of the screw 20 in the channel 13 of the sleeve 10. The retaining means 30 comprise at least one protrusion 31 penetrating into the channel 13 through the wall 15 of the body 11, arranged to limit the movement of the screw 20 in the channel 13 towards at least the end 14 of the sleeve. At least one protrusion of the retaining means is forced by means of mechanical force (such as impact or compression) to penetrate from outside the body wall through the wall so that the protrusions reach the channel of the sleeve so as to limit the movement of the screw. The structural features of the sleeve of the fastener (such as the thickness of the sleeve wall) and the material are configured according to the retaining means used so that the sleeve wall can be penetrated by the protrusions of retaining means. The sleeve 10 can be made of injection moulded or 3D-printed polymer, for example, or other suitable formable material, such as composite.

For example, a staple 30 arranged to penetrate the wall 15 of the body can serve as retaining means, and legs (i.e., shanks) of the staple can serve as retaining means, at least one 31 of which is located towards the end of the sleeve 14 of the screw head 23 so that the screw 20 cannot slip out of the channel 13 at the end of the sleeve 14. In the context of this disclosure, *staple* means an essentially U-shaped metal wire or a narrow strip of metal. The staple 30 in FIGURES 1a and 1b comprises an essentially straight base section (i.e., crown), from which two essentially parallel legs 31 and 32, arranged side by side, extend in one plane.

In some embodiments the protrusions of the retaining means penetrating through the body of the sleeve can be arranged on both sides of the head of the attachment means in the longitudinal direction of the body to limit the movement of the attachment means in both directions in longitudinal direction of the body. The retaining means are in this case designed so that the at least one protrusion limiting the movement of the attachment means towards the tip will bend out of the way of the head of the attachment means when fastening the attachment means to the receiving structure. As shown in FIGURES 1a and 1b, the staple 30 acting as the retaining means, can, for example, be arranged to penetrate through the body so that its two legs 31, 32 are arranged on either side of the head 23 of the screw in the longitudinal direction of the body 11 to limit the movement of the screw in both directions. The base section of the staple can be oriented parallel with the longitudinal axis of the body of the sleeve, whereby the straight base section will be positioned flat against the outer surface of the body of the sleeve. The design of the staple 30 is arranged in such a way that the leg 32 limiting the movement of the screw 20 towards the tip 12 is bent out of the way of the head of the screw 20 when fastening the screw 20 to the receiving structure.

In some embodiments, the protrusions of the retaining means are arranged to penetrate into the channel of the sleeve offset from the center line of the channel of the sleeve so that its protrusion on the tip side of the sleeve passes by the shank 21 of the screw. FIGURE 3 is a cross-sectional illustration of the fastener of FIGURE 1a in plane perpendicular to the longitudinal direction of the sleeve (in FIGURE 1a this plane is shown as line A-A). The viewing direction (shown with arrows in FIGURE 1a) is from the end of the sleeve 10 towards the tip of the sleeve. In FIGURE 3, there is a screw acting as an attachment means channel of the sleeve, the head 23 of the screw being in front of the shank 21 (shown with dashed lines) seen in the viewing direction. The legs 31 and 32 of the staple 30 acting as the retaining means (leg 32 below the leg 31 in FIGURE 3, not shown) extend from the base section of the staple 30 located outside the body of the sleeve through the wall 15 of the sleeve to the channel of the sleeve. Of the legs, at least leg 32 located below the head of the screw is arranged to extend along a line that does not intersect the cross-section of the shank 21 of the screw. Thus the leg 32 will not collide with the shank of the screw 21 when staple 30 is being forced to penetrate through the wall 15 of the body of the sleeve. However, it is not necessary to offset the protrusions of the retaining means significantly or at all from the center line of the channel of the sleeve. In some embodiments the protrusions of the retaining means are dimensioned so that when forced through the wall of the sleeve body, they do not extend to the shank of the retaining means.

Although FIGURES 1a, 1b, 2 and 3 illustrate an embodiment in which the retaining means is in the form of a staple, the fastener according to the present disclosure is not limited to such solutions only. The retaining means can also be implemented by means of other types of means penetrating through the body of the sleeve, such as one or more nails of the nail gun. In addition, the number and orientation of the retaining means can vary depending on the embodiment.

Unlike the embodiment of FIGURES 1a, 1b, 2 and 3, there can also be more than one staple. In some embodiments one staple can be entirely positioned on head of the screw at the side of the end of the sleeve, while the other staple can be entirely on the side of the tip of the sleeve at the head of the screw. FIGURE 4 illustrates another embodiment in which the staple 30b is forced through the wall 15 of the body so that its legs 31b extend on a plane perpendicular to the longitudinal axis of the sleeve. The staple 30b shown in FIGURE 4 is located on the side of the end of the sleeve of the head of the screw 23, thus preventing the screw from sliding from the channel 13 of the sleeve away at the end of the sleeve. However, in such an embodiment the base section of the staple 30b is preferably arranged to be formed as a curve along the outer surface of the body wall 15 of the sleeve so that the base section does not interfere with the insertion of the fastener. In such an embodiment there can also be another corresponding staple on the side of the tip 12 of the of the head 23 of the screw. This second staple prevents the screw from moving towards the tip of the sleeve. However, the legs of the staple are arranged to bend out of the way when the screw is being attached to the receiving structure.

In some embodiments of the fastener according to this disclosure, the retaining means penetrating through the wall of the sleeve restrict the movement of the screw only towards the end of the sleeve (i.e. upwards). However, some embodiments of this type can comprise other kinds of retaining means, limiting the movement of the screw towards the tip of the sleeve (i.e. downwards). Some examples of such other types of retaining means can include, for example, a narrowed portion formed in the channel at the tip of the sleeve or an adhesive tape adhered over the tip.

Although in the above exemplary embodiments a screw acts as an attachment means for attaching the sleeve to the receiving structure, the attachment means of the fastener according to this disclosure is not limited to screws only. For example, a nail, such as a concrete nail, can also act as an attachment means.

A method for making the fastener described above is also disclosed. The method comprises the steps of receiving the sleeve of the fastener and attaching the retaining means to the sleeve. The sleeve comprises an elongated body 11 and a channel 13 extending longitudinally through the body 11. Before attaching the retaining means to the sleeve, the attachment means 20, consisting of the shank 21 and the head 23, fitted to the end of the shank 21, is arranged in the channel of the sleeve. The attachment means can be, for example, a screw or a nail. Positioning of the attachment means 20 in the channel 13 of the sleeve takes place already before receiving the sleeve is or after receiving the sleeve. During the fastening phase, at least one protrusion 31 is forced from the outside of the body of the sleeve 11 through the body wall 11c to extend to the channel of the sleeve 13, preventing the attachment means 20 from moving in the longitudinal direction of the body 11 in at least one direction.

In addition to this, an arrangement for implementing the above method above is disclosed. The arrangement comprises a holder for receiving the sleeve of the fastener described above, a device for forcing, at the desired point, the retaining means through the wall of the sleeve received in the holder, and an adjusting means for adjusting the said desired point of the retaining means at least in the longitudinal direction of the body of the sleeve. In the context of this disclosure, *forcing* means applying mechanical force to the retaining means and/or the body of the sleeve so that the retaining means penetrate through the wall of the wall of the sleeve into the channel of the sleeve. As has been described above, the retaining means can be in the form of a staple or a nail, for example. Thus, the device for forcing the retaining means into the fastener can, for example, be in the form of a stapler or a nail gun. Alternatively, forcing can also mean, for example, that the retaining means and the sleeve are positioned between counterparts so that the retaining means are located by their legs against the outer surface of the body of the sleeve and then the counterparts are pressed towards each other to force the retaining means to penetrate through the wall of the body of the sleeve.

### LIST OF REFERENCE NUMBERS

| **Number** | **Part** | **Number** | **Part** |
|---|---|---|---|
| 10 | sleeve | 21 | shank of the screw |
| 11 | Body | 22 | tip of the screw |
| 12 | tip of the sleeve | 23 | head of the screw |
| 13 | channel | 30, 30b | staple (retaining means) |
| 13a | first section | 31, 31b | leg of the staple on the end side of the sleeve |
| 13b | second section | 32 | leg of the staple on the tip side of the sleeve |
| 14 | end of the sleeve | d₁₃ₐ | inner diameter of the first section of the channel of the sleeve |
| 15 | wall of the body | d_{13b} | inner diameter of the second section of the channel of the sleeve |
| 20 | screw | | |

## Claims

1. A fastener for fastening a cover layer to a receiving structure, the fastener (100) comprising:
- a sleeve (10), comprising
∘ an elongated body (11) extending between the tip (12) of the sleeve and the end (14) of the sleeve, and
∘ a channel (13) parallel with the longitudinal axis of the body (11), extending through the body (11) from the end (14) of the sleeve to the tip (12) of the sleeve,
- an attachment means (20), such as a screw or nail, arranged in the channel (13), the attachment means (20) comprising a shank (21) and a head (23) fitted to the end of the shank (21),
the channel (13) having a wide section (13a) allowing movement of the attachment means (20) in the channel (13) towards the longitudinal axis of the body (11) of the sleeve, and a narrower section (13b) allowing the movement of the shank (21) of the attachment means, but preventing the movement of the head (23) of the attachment means through the tip (12) of the sleeve,
**characterized in that** the fastener additionally comprises
- retaining means (30; 30b) for limiting the movement of the attachment means (20) in the channel (13) of the sleeve, the retaining means (30, 30b) comprising at least one protrusion (31) penetrating into the channel (13) through the wall (15) of the body (11) and being arranged to limit the movement of the attachment means (20) in the channel (13) towards at least the end (14) of the sleeve.

2. A fastener according to claim 1, wherein
- a staple (30; 30b) penetrating through the wall of the body (15) acts as the retaining means, with at least one of the legs (31, 31b) penetrating the channel being located on the end (14) side of the sleeve of the head (23) of the attachment means so that the attachment means (20) cannot slide away from the channel (13) at the end (14) of the sleeve.

3. A fastener according to claim 1 or 2, wherein
- the retaining means (30) are arranged to penetrate through the body in such a way that its two protrusions (31, 32) are positioned in the longitudinal direction of the body (11) on each side of the head (23) of the attachment means to limit the movement of the attachment means (20) in both directions in the longitudinal direction of the body (11), and
- the structure of the retaining means (30) is configured such that the protrusion (32) limiting the movement of the attachment means (20) towards the tip (12) is bent out of the way of the head (23) when fastening the attachment means (20) to the receiving structure.

4. A fastener according to any of claims 1-3, wherein
- the retaining means (30) are offset from the centre line of the channel of the sleeve so that at least the protrusion (32) thereof on the side of the tip (12) of the sleeve passes by the shank (21) of the attachment means.

5. An arrangement, **characterized in that** the arrangement comprises:
- a holder for receiving the sleeve (10) of the fastener according to claim 1,
- an apparatus for forcing the retaining means (30; 30b) through the wall (15) of the body (11) of the sleeve (10) of the fastener received in the holder, and
- adjusting means for adjusting the said desired position of the retaining means in at least the longitudinal direction of the body (11) of the sleeve.

6. A method of manufacturing a fastener, the method comprising a step in which:
- receiving a fastener sleeve (10) and an attachment means (20), wherein the sleeve (10) comprises an elongated body (11) and a channel (13) extending longitudinally through the body (11) and having a wide section (13a) allowing the movement of the attachment means (20) in the channel (13) in the direction of the longitudinal axis of the body (11) of the sleeve, and a narrower section (13b) allowing the movement of the shank (21) of the attachment means, but preventing the movement of the head (23) of the attachment means through the tip (12) of the sleeve, and wherein the attachment means (20) is placed in the channel (13),
**characterized in that** the method further comprises a step, in which
- forcing at least one protrusion (31) of the retaining means (30, 30b) from the outside of the body (11) of the sleeve through the body wall (11c) to extend to the channel (13) of the sleeve and preventing the attachment means (20) from moving in the longitudinal direction of the body (11) in at least one direction.
